# EUROPEAN PATENT APPLICATION

(11) **EP 3 205 581 A1**
(43) Date of publication of application: **16.08.2017**
(21) Application number: 17155343.1
(22) Date of filing: 09.02.2017
(51) Int. Cl.: B64D 27/20

(54) **AIRCRAFT AND EMPENNAGE SECTION OF AN AIRCRAFT**

(30) Priority: 13.02.2016 US 201615043514
(71) Applicant: MRA Systems, Inc., Baltimore, MD 21220 (US)
(72) Inventor: GLOVER, Jeffrey, Cincinnati, OH 45215 (US); STUART, Alan Roy, Cincinnati, OH 45214 (US); BREEZE-STRINGFELLOW, Andrew, Cincinnati, OH 45215 (US)
(74) Representative: Illingworth-Law, William Illingworth

(57) **Abstract**

An aircraft (10, 110) having a fuselage (12, 112) terminating in an empennage (16, 116) with a tail (18, 118) extending upwardly from the empennage (16, 116). An engine strut (124, 224, 324) extends from the empennage (16, 116) with an engine (122, 222, 322) mounted to the engine strut (124,224, 324) and a moveable control surface (130, 230, 330, 332) provided on the engine strut (124, 224, 324).

## Description

### BACKGROUND OF THE INVENTION

Aircraft typically comprise a fuselage with a tail extending from the rear of the fuselage. The traditional T-tail style can include horizontal stabilizers, useful in providing a downforce for maintaining flight stability. However, the T-tail adds to the overall aircraft weight as well as increases aerodynamic drag.

The traditional T-tail can also induce flutter. Flutter is the phenomena where vibrations occurring in the aircraft match the natural frequency of the structure and can increase in amplitude without proper damping. Flutter further reduces aerodynamic efficiency of the aircraft and can induce shaking of the aircraft.

### BRIEF DESCRIPTION OF THE INVENTION

In one aspect, the present disclosure relates to an aircraft including a fuselage terminating in an empennage with a tail extending upwardly from the empennage. An engine strut extends from the empennage with an engine mounted to the engine strut and a moveable control surface provided on the engine strut.

In another aspect, the present disclosure relates to an empennage section of an aircraft including an engine strut extending from the empennage and defining at least a portion of a horizontal stabilizer with an engine mounted to the engine strut. A propeller with a diameter greater than 3 meters and a moveable control surface are provided on one of the horizontal stabilizer and the engine.

In yet another aspect, the present disclosure relates to an empennage section of an aircraft including an engine strut extending from the empennage and defining at least a portion of a horizontal stabilizer. An engine nacelle mounted to the engine strut, a stabilator rotatably mounted with the engine nacelle, and a moveable control surface are all provided on one of the horizontal stabilizer and the stabilator.

### BRIEF DESCRIPTION OF THE DRAWINGS

In the drawings:
FIG. 1 is a perspective view of an aircraft from the prior art.
FIG. 2 is a perspective view of an aircraft with an engine mounted to an engine strut in accordance with various aspects described herein.
FIG. 3 is a top view of an example configuration of an engine strut that can be utilized on the aircraft in accordance with various aspects described herein.
FIG. 4 is a top view of an example configuration of an engine strut that can be utilized on the aircraft of in accordance with various aspects described herein.
FIG. 5 is a top view of an example configuration of an engine strut that can be utilized on the aircraft of in accordance with various aspects described herein.
FIG. 6 is a perspective view of an engine having a plurality of propellers open to the elements in accordance with various aspects described herein.

### DESCRIPTION OF EMBODIMENTS OF THE INVENTION

The described embodiments of the present invention are directed to an engine strut with an engine mounted thereon that can be used, for example, in an aircraft. While this description is primarily directed towards use on an aircraft, it is also applicable to any vehicle or environment which utilizes an engine strut.

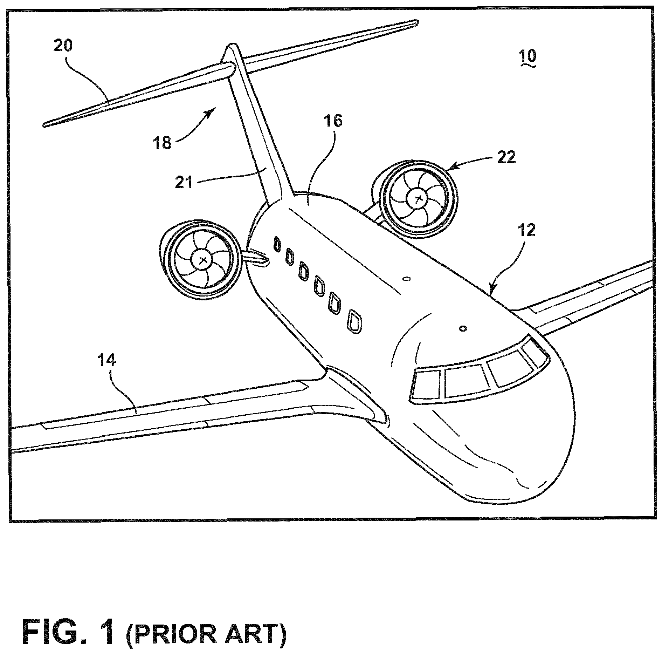

As illustrated in FIG. 1, prior art aircraft 10 include a fuselage 12 with wings 14 extending outward therefrom. The fuselage 12 terminates in an empennage 16 with a tail 18 extending upwardly from the empennage 16. The tail 18 is a t-tail and includes a horizontal stabilizer 20 extending horizontally from each side of a vertical section 21 of the tail 18. The aircraft 10 includes at least one engine 22 coupled to the empennage 16 near the rear of the aircraft 10.

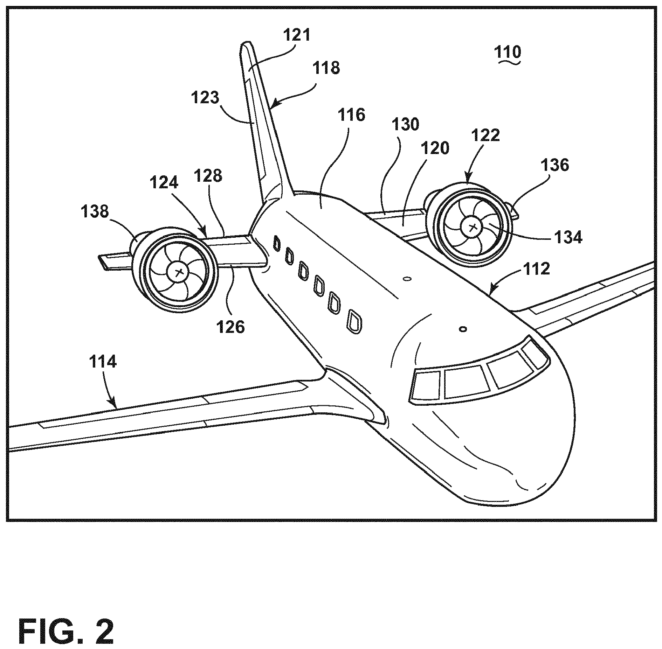

FIG. 2 illustrates an exemplary embodiment of an aircraft 110 including a fuselage 112 with wings 114 extending outward therefrom. A tail 118 extends vertically from an empennage 116 and an engine strut 124 extends laterally from the empennage 116. Unlike the tail 18 of the prior art aircraft 10, the tail 118 of the aircraft 110 does not include a horizontal stabilizer. Instead it merely includes a vertical stabilizer 121, which helps to increase stability of the aircraft and prevents the nose of the aircraft from swinging from side to side, or yaw. While the vertical stabilizer 121 controls the yaw, a rudder 123 at the tail end of the vertical stabilizer 121 is placed for changing the yaw.

Mounting an engine 122, with a propeller 134 having a large diameter, for example ranging from 3 - 5 meters (10 - 15 feet), at the empennage 116 requires the engine 122 to be mounted a considerable distance from the empennage 116 for proper propeller tip clearance or nacelle clearance. Mounting the engine 122 to the engine strut 124 at a distance that provides this clearance allows for engine strut 124 to be of a length that at least a portion of the engine strut 124 can define a horizontal stabilizer 120 positioned between the empennage 116 and the engine 122. Optionally, further extending from the engine 122 on the opposite side of the engine strut is an outboard wing section 136, which is mounted to an engine nacelle 138 housing the engine 122.

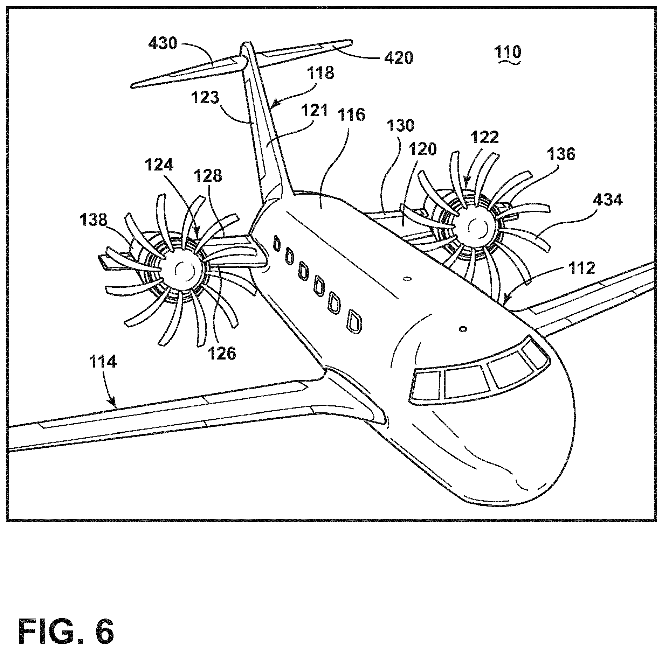

The engine 122 can be any aircraft engine having an intake, compressor, combustor, and turbine. In particular, engines having a large diameter propeller, blade, or fan intake such as a turbojet, turboprop, turboshaft, or turbofan engine can be mounted as described. The intake portion of the engine can be housed in the nacelle 138 or open to the elements (FIG. 6) depending on the type of engine and aircraft.

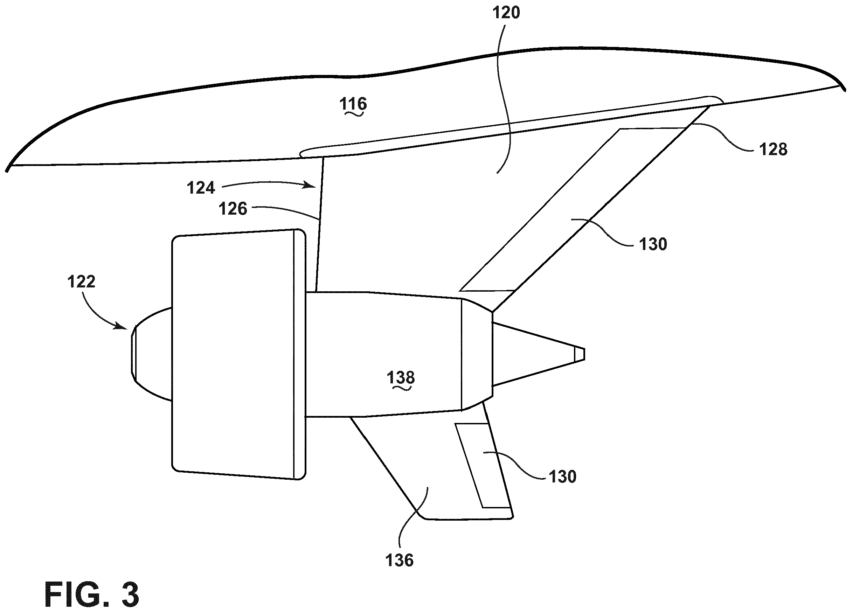

Turning to Figure 3, the engine strut 124 comprises an airfoil cross section running from a leading edge 126 to a trailing edge 128. The airfoil cross section of the engine strut 124 can be designed to produce the required downforce for aircraft up and down disturbance, or pitch stability during mid-cruise flight acting as the horizontal stabilizer 120.

Both the engine strut 124 and the outboard wing section 136 can be provided with an elevator 130 as depicted. The elevator 130 provides further control for the pitch disturbance of the aircraft by providing varying offsetting downward forces which compensate for the gusting lift force provided by the wings 114.

A plurality of configurations exist regarding the placement and inclusion of an elevator, trim tab, or outboard wing section. The second and third embodiments are similar to the first embodiment; therefore, like parts will be identified with like numerals increasing by 100 and 200 respectively, with it being understood that the description of the like parts of the first embodiment applies to the second and third embodiments, unless otherwise noted.

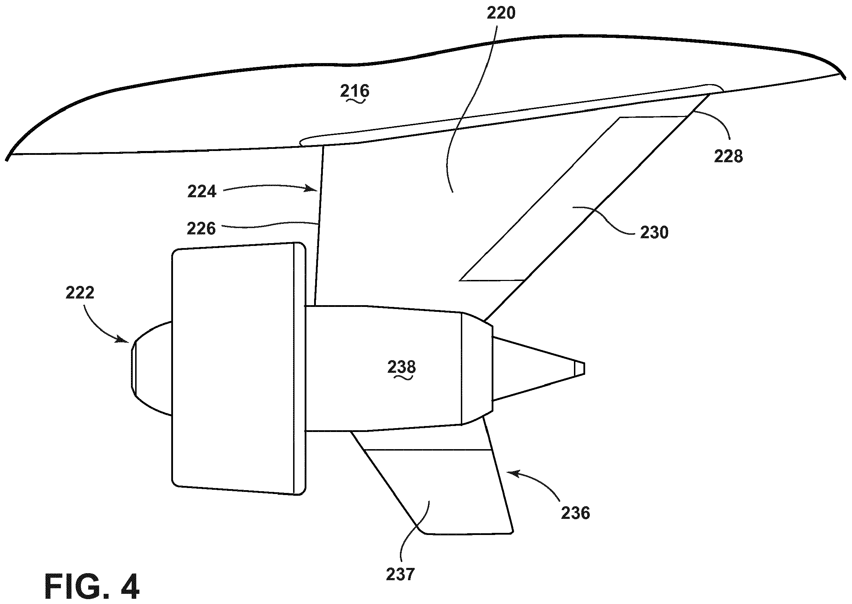

FIG. 4 illustrates a second embodiment having an engine strut 224. One difference is that an outboard wing section 236 includes a stabilator 237. The term stabilator as used herein describes an all moving tail or fully movable aircraft stabilizer, which controls for pitch. The stabilator 237 can provide vertical motion by being rotatably mounted to the outboard wing section 236 as shown, or directly to an engine nacelle 238. Rotatably mounted refers to the ability to rotate about an axis parallel to a lateral axis through the length of the engine strut 124 of the aircraft providing additional downforces for take-off rotation and during slow flight.

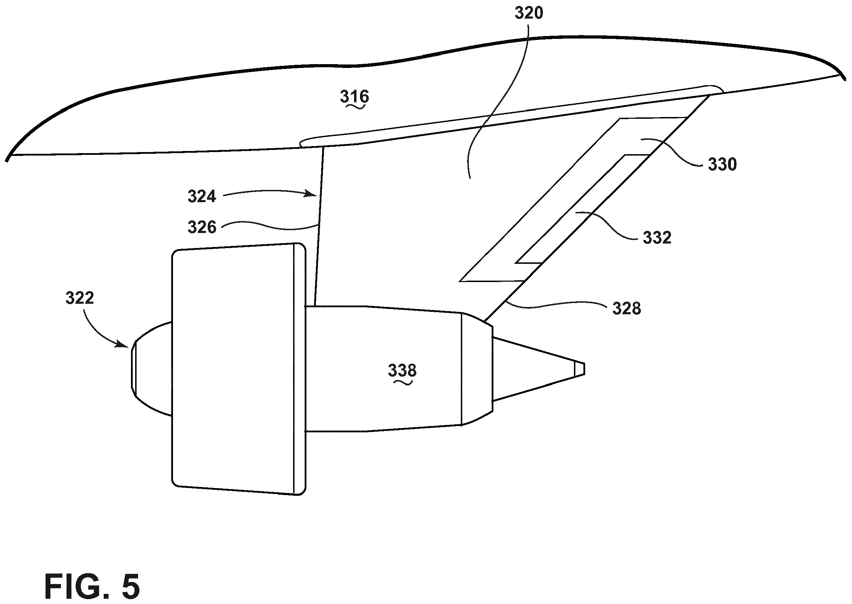

In the third embodiment illustrated in FIG. 5, the engine strut 324 includes a moveable control surface including at least one of an elevator 330 and a trim tab 332 integrated onto the elevator 330 provided along the trailing edge 328 defining at least a portion of the trailing edge 328. The trim tab 332 is a control device for the elevator 330 placed to establish a resting or neutral position for the elevator 330.

Regardless of the location of the elevator, the elevator and trim tab are incorporated to provide additional downforce for take-off rotation and during slow flight.

The above described embodiments provide a variety of benefits including, but not limited to, that the length of the engine strut allows for it to be used as a horizontal stabilizer. Use of the engine strut as a horizontal stabilizer replaces the function of a traditional T-Tail horizontal stabilizer. As the traditional horizontal portion of T-Tail is no longer necessary the weight of the aircraft can be reduced and the drag can also be reduced. Further still, flutter associated with a traditional T-Tail design can be eliminated. As the ratio of the propeller diameter to the core engine diameter increases more weight savings for the aircraft can be realized.

It is contemplated in FIG. 6 that additional pitch authority can be provided by employing a small horizontal stabilizer 420 and elevator 430 added to the tail 118. The horizontal stabilizer 420 and elevator 430 can be smaller than the traditional T-Tail horizontal stabilizers of the prior art, and still allow for a decrease in flutter associated with current T-Tail horizontal stabilizer designs. FIG. 6 also depicts an engine 122 having a plurality of propellers 434 open to the elements, which can be contemplated in any one of the aforementioned embodiments. Such an engine 122 can be thought of as having open or unshrouded propellers 434.

To the extent not already described, the different features and structures of the various embodiments can be used in combination with each other as desired. That one feature is not illustrated in all of the embodiments is not meant to be construed that it cannot be, but is done for brevity of description. Thus, the various features of the different embodiments can be mixed and matched as desired to form new embodiments, whether or not the new embodiments are expressly described. All combinations or permutations of features described herein are covered by this disclosure.

This written description uses examples to disclose the invention, including the best mode, and also to enable any person skilled in the art to practice the invention, including making and using any devices or systems and performing any incorporated methods. The patentable scope of the invention is defined by the claims, and can include other examples that occur to those skilled in the art. Such other examples are intended to be within the scope of the claims if they have structural elements that do not differ from the literal language of the claims, or if they include equivalent structural elements with insubstantial differences from the literal languages of the claims.

Various aspects and embodiments of the present invention are defined by the following numbered clauses:
1. An aircraft comprising:
   a fuselage terminating in an empennage;
   a tail extending upwardly from the empennage;
   an engine strut extending from the empennage;
   an engine mounted to the engine strut; and
   a moveable control surface provided on the engine strut.
2. The aircraft of clause 1 wherein the engine strut extends laterally from the empennage.
3. The aircraft of clause 1 or clause 2 wherein the tail extends vertically from the empennage.
4. The aircraft of any preceding clause wherein the engine strut comprises an airfoil cross section.
5. The aircraft of any preceding clause wherein the airfoil cross section terminates in a trailing edge and the moveable control surface is provided along the trailing edge.
6. The aircraft of any preceding clause wherein the moveable control surface defines at least a portion of the trailing edge.
7. The aircraft of any preceding clause wherein the moveable control surface comprises at least one of an elevator or trim tab.
8. The aircraft of any preceding clause wherein the engine strut comprises an airfoil cross section and the moveable control surface defines at least a portion of a trailing edge of the airfoil cross section.
9. The aircraft of any preceding clause wherein the moveable control surface comprises at least one of an elevator or trim tab.
10. The aircraft of any preceding clause wherein at least a portion of the engine strut defines a horizontal stabilizer.
11. The aircraft of any preceding clause, further comprising a stabilator extending from the engine on an opposite side of the engine strut.
12. The aircraft of any preceding clause wherein the engine comprises a propeller having a diameter greater than 3 meters.
13. An empennage section of an aircraft comprising:
   an empennage;
   an engine strut extending from the empennage and defining at least a portion of a horizontal stabilizer;
   an engine mounted to the engine strut and having a propeller with a diameter greater than 3 meters; and
   a moveable control surface provided on one of the horizontal stabilizer and the engine strut.
14. The empennage section of any preceding clause wherein the engine strut has an airfoil cross section.
15. The empennage section of any preceding clause wherein the moveable control surface defines at least a portion of a trailing edge of the horizontal stabilizer.
16. The empennage section of any preceding clause wherein the moveable control surface comprises at least one of an elevator or trim tab.
17. The empennage section of any preceding clause, further comprising a stabilator extending from the engine on an opposite side of the engine strut.
18. A strut section of an aircraft, comprising: an engine strut having a moveable control surface provided thereon and where the engine strut is configured to extend from an empennage and have an engine mounted thereto.
19. The strut section of any preceding clause wherein the moveable control surface comprises at least one of an elevator or a trim tab.
20. The strut section of any preceding clause wherein the engine strut comprises an airfoil cross section and the moveable control surface defines at least a portion of a trailing edge of the airfoil cross section.

## Claims

1. An aircraft (10, 110) comprising:
a fuselage (12, 112) terminating in an empennage (16, 116);
a tail (18, 118) extending upwardly from the empennage (16, 116);
an engine strut (124, 224, 324) extending from the empennage (16, 116);
an engine (122, 222, 322) mounted to the engine strut (124, 224, 324); and
a moveable control surface (130, 230, 330, 332) provided on the engine strut (124, 224,324).

2. The aircraft (10, 110) of claim 1 wherein the engine strut (124, 224, 324) extends laterally from the empennage (16, 116).

3. The aircraft (10, 110) of claim 1 or claim 2 wherein the tail (18, 118) extends vertically from the empennage (16, 116).

4. The aircraft (10, 110) of any preceding claim wherein the engine strut (124, 224, 324) comprises an airfoil cross section.

5. The aircraft (10, 110) of any preceding claim wherein the airfoil cross section terminates in a trailing edge (128, 228, 328) and the moveable control surface (130, 230, 330, 332) is provided along the trailing edge (128, 228, 328).

6. The aircraft (10, 110) of any preceding claim wherein the moveable control surface (130, 230, 330, 332) defines at least a portion of the trailing edge (128, 228, 328).

7. The aircraft (10, 110) of any preceding claim wherein the moveable control surface (130, 230, 330, 332) comprises at least one of an elevator or trim tab (130, 230, 330, 332).

8. The aircraft (10, 110) of any preceding claim wherein the engine strut (124, 224, 324) comprises an airfoil cross section and the moveable control surface (130, 230, 330, 332) defines at least a portion of a trailing edge (128, 228, 328) of the airfoil cross section.

9. The aircraft (10, 110) of any preceding claim wherein the moveable control surface (130, 230, 330, 332) comprises at least one of an elevator or trim tab (130, 230, 330, 332).

10. The aircraft of any preceding claim wherein at least a portion of the engine strut defines a horizontal stabilizer

11. The aircraft (10, 110) of any preceding claim wherein at least a portion of the engine strut (124, 224, 324) defines a horizontal stabilizer (120, 220, 320) extending from the engine (122, 222, 322) on an opposite side of the engine strut (124, 224, 324).

12. The aircraft of any preceding claim further comprising a stabilator extending from the engine on an opposite side of the engine strut.

13. The aircraft of any preceding claim wherein the engine comprises a propeller having a diameter greater than 3 meters.

14. An empennage section of an aircraft comprising:
an empennage;
an engine strut extending from the empennage and defining at least a portion of a horizontal stabilizer;
an engine mounted to the engine strut and having a propeller with a diameter greater than 3 meters; and
a moveable control surface provided on one of the horizontal stabilizer and the engine strut.

15. A strut section of an aircraft, comprising: an engine strut having a moveable control surface provided thereon and where the engine strut is configured to extend from an empennage and have an engine mounted thereto.
